# EUROPÄISCHE PATENTSCHRIFT

(11) **EP 1 116 166 B1**
(45) Veröffentlichungstag und Bekanntmachung des Hinweises auf die Patenterteilung: **05.06.2002**
(21) Anmeldenummer: 99953626.1
(22) Anmeldetag: 27.08.1999
(51) Int. Cl.: G06K 9/00

(54) **SENSORFELD FÜR EINEN KAPAZITIV MESSENDEN FINGERPRINT-SENSOR UND VERFAHREN ZUR HERSTELLUNG EINES DERARTIGEN SENSORFELDES**
SENSOR FIELD FOR CAPACITIVE MEASURING FINGERPRINT SENSOR AND METHOD FOR THE PRODUCTION OF SAID SENSOR FIELD
CHAMP CAPTEUR POUR UN CAPTEUR D'EMPREINTES DIGITALES A MESURE CAPACITIVE ET PROCEDE DE FABRICATION DUDIT CHAMP CAPTEUR

(30) Priorität: 31.08.1998 DE 19839642
(43) Veröffentlichungstag der Anmeldung: 18.07.2001
(73) Patentinhaber: Infineon Technologies AG, 81669 München (DE)
(72) Erfinder: ZELLNER, Maximilian, D-85244 Röhrmoos (DE); ZAPF, Jörg, D-81927 München (DE); DEMMER, Peter, D-81479 München (DE)
(74) Vertreter: Epping, Wilhelm, Dipl.-Ing.
(86) Internationale Anmeldenummer: DE9902695
(87) Internationale Veröffentlichungsnummer: WO0013130

(56) Entgegenhaltungen:
- EP-A- 0 459 808
- WO-A-98/11500
- FR-A- 2 736 179
- US-A- 5 286 335

## Beschreibung

Fingerabdrücke ermöglichen eine sichere Feststellung der Identität von Personen. Im Zusammenhang mit der Benutzung von Kreditkarten, anderen Arten von Chipkarten, Ausweisen und dergl. werden daher Fingerprint-Sensoren zur Identifikation der berechtigten Personen eingesetzt. Aus der EP 0 459 808 B1 ist beispielsweise ein derartiger Fingerprint-Sensor bekannt, der eine Matrix aus druckempfindlichen Zellen aufweist und den Hautlinien an den Fingerbeeren entsprechende Schaltvorgänge auslöst, die dann über eine Auswerteelektronik zur Identifikation herangezogen werden. Insbesondere offenbart die Druckschrift ein alternatives Sensorprinzip basierend auf mechanischer Schließung eines druckempfindlichen "Schalters". Aus EP 0 459808 B1 sind daher die Merkmale der Ansprüche 1 und 10 nur bis auf folgende Ausnahmen bekannt:
- dass es sich um einen kapazitiv messenden Fingerprint-Sensor handelt;
- dass eine zweite Isolationsschicht auf die erste Isolationsschicht, die ersten Elektroden, die zweiten Leiterbahnen und die zweiten Elektroden aufgebracht wird, sodaß ein direkter elektrischer Kontakt der ersten Elektroden und Leiterbahnen mit den zweiten Elektroden und Leiterbahnen verhindert wird.
- das Herstellen eines kapazitiv messenden Sensorfeldes,
- das Aufbringen der dünnen Basisschicht aus einem flexiblen organischen Material auf einem starren Hilfsträger;
- das Aufbringen einer zweiten Isolationsschicht auf die erste Isolationsschicht, die ersten Elektroden, die zweiten Leiterbahnen und die zweiten Elektroden;
- das Ablösen der Basisschicht vom Hilfsträger durch Einwirkung von Laserstrahlung, die durch den Hilfsträger hindurch auf die Basisschicht gerichtet wird, wobei der Hilfsträger aus einem für die zur Ablösung der Basisschicht verwendete Laserstrahlung zumindest weitgehend durchlässigen Material besteht.
Es gibt auch bereits kapazitiv messende Fingerprint-Sensoren, bei welchen das Sensorfeld Kapazitätsunterschiede zwischen aufliegenden Bereichen und nicht aufliegenden Bereichen der Fingerbeere erfaßt und diese Kapazitätsunterschiede dann über eine Auswerteelektronik eine sichere Identifikation ermöglichen.

Das Sensorfeld eines kapazitiv messenden Fingerprint-Sensors sollte zur sicheren Erfassung von Fingerabdrücken eine Mindestgröße von ca. 13x13 mm aufweisen und bei der Verwendung in Chipkarten außerdem eine gewisse Flexibilität besitzen. Da andererseits für derartige Sensorfelder Strukturfeinheiten von weniger als 100 µm erforderlich sind, werden die entsprechenden Strukturen in Dünnfilmtechnik auf Silizium aufgebaut. Eine Flexibilisierung derartiger Sensorfelder kann dabei, innerhalb bestimmter Grenzen, durch kostenintensives Dünnschleifen des Siliziumträgers erreicht werden.

Der im Anspruch 1 angegebenen Erfindung liegt das Problem zugrunde, ein Sensorfeld für einen kapazitiv messenden Fingerprint-Sensor zu schaffen, das einfach aufgebaut ist und insbesondere in kostengünstiger Dünnfilmtechnik realisiert werden kann.

Der im Anspruch 10 angegebenen Erfindung liegt das Problem zugrunde, ein Verfahren zur Herstellung eines Sensorfeldes für einen kapazitiv messenden Fingerprint-Sensor zu schaffen, welches eine Realisierung als flexible Feinstruktur in Dünnfilmtechnik ermöglicht.

Das erfindungsgemäße Sensorfeld ermöglicht ein einfaches und sicheres Meßprinzip, bei welchem die Änderung der Streukapazität zweier benachbarter Elektroden durch die aufliegenden Finger-Hautrillen gemessen wird. Der Aufbau des Sensorfeldes in Dünnfilmtechnik kann dabei auf einem starren Substrat erfolgen oder als flexible Feinstruktur ausgeführt werden, welche für eine Anwendung in Chipkarten geeignet ist. Letzteres wird durch das erfindungsgemäße Verfahren zur Herstellung eines Sensorfeldes ermöglicht. Diesem Verfahren liegt die Erkenntnis zugrunde, daß die mit der Prozessierung flexibler Trägermaterialien verbundenen Nachteile dann vermieden werden können, wenn es gelingt, eine dünne Basisschicht aus einem flexiblen organischen Material zunächst auf einen starren Hilfsträger aufzubringen und nach der Herstellung der metallischen Feinstrukturen des Sensorfeldes ohne die Gefahr von Beschädigungen wieder vom Hilfsträger abzulösen. Eine derartige schonende Ablösung der Basisschicht kann durch Laserablation von der Rückseite des Hilfsträgers aus vorgenommen werden, sofern der Hilfsträger aus einem für die verwendete Laserstrahlung zumindest weitgehend durchlässigen Material besteht. Während bei der konventionellen Herstellung von flexiblen Verdrahtungen nur Strukturdimensionen von über 100 µm realisiert werden können, ermöglicht hier die temporäre Verwendung des starren Hilfsträgers Strukturfeinheiten von deutlich weniger als 100 µm.

Bevorzugte Ausgestaltungen des erfindungsgemäßen Sensorfeldes sind in den Ansprüchen 2 bis 9 angegeben.

Bevorzugte Ausgestaltungen des erfindungsgemäßen Verfahrens zur Herstellung eines Sensorfeldes sind in den Ansprüchen 11 bis 16 angegeben.

Die Weiterbildung nach Anspruch 2 ermöglicht den Aufbau des Sensorfeldes auf einer Basisschicht aus kostengünstigem organischem Material. Wird dabei gemäß Anspruch 3 ein flexibles organisches Material verwendet, so kann das Sensorfeld ohne Bruchgefahr in Chipkarten oder dergl. eingesetzt werden.

Die Weiterbildungen nach den Ansprüchen 5 und 16 bringen durch die Verwendung kostengünstiger handelsüblicher Folien weitere Vorteile. Gemäß Anspruch 5 wird dabei eine Folie aus einem thermostabilen Polyimid bevorzugt, zumal hierdurch der problemlose Einsatz des fertigen Sensorfeldes auch bei erhöhter Umgebungstemperatur ermöglicht wird. Die Folie kann dann gemäß Anspruch 6 durch das Aufbringen einer Planarisierung eine sehr hohe Oberflächenqualität erhalten, welche die Ausbildung feinster metallischer Strukturen ermöglicht.

Die Ausgestaltung nach Anspruch 11 ermöglicht eine Durchlässigkeit des Hilfsträgers für die Laserstrahlung von etwa 90 %.

Die Ausgestaltung nach Anspruch 12 ermöglicht ebenfalls eine Durchlässigkeit des Hilfeträgers für die Laserstrahlung von etwa 90 %, wobei hier jedoch zusätzlich die relativ geringen Kosten für einen Hilfsträger aus Borosilicatglas zu betonen sind.

Die Weiterbildung nach Anspruch 13 ermöglicht durch das Aufbringen einer Haftschicht auf den Hilfsträger eine verbesserte Haftung der Basisschicht während der Prozessierung des Aufbaues. Dabei wird gemäß Anspruch 14 eine Haftschicht aus Titan, die für die Laserstrahlung beim Ablösen der Basisschicht durchlässig ist, bevorzugt. Gemäß Anspruch 15 kann die Haftschicht mit einer äußerst geringen Schichtdicke günstig durch Sputtern auf den Hilfsträger aufgebracht werden.

Die Ausgestaltung nach Anspruch 16 ermöglicht eine äußerst einfache und wirtschaftliche Applikation der Basisschicht auf den Hilfsträger.

Im folgenden wird ein Ausführungsbeispiel der Erfindung anhand der Zeichnungen näher erläutert.

Es zeigen
- Figur 1: eine Draufsicht auf das Sensorfeld eines kapazitiv messenden Fingerprint-Sensors in stark vereinfachter schematischer Darstellung,
- Figur 2: das Ersatzschaltbild des in Figur 1 dargestellten Sensorfeldes,
- Figur 3: das Meßprinzip des in Figur 1 dargestellten Sensorfeldes,
- Figur 4: einen Schnitt gemäß der Linie IV - IV der Figur 1,
- Figur 5: eine Draufsicht auf einen fertigen Fingerprint-Sensor und
- Figur 6: eine Anordnung zur Ablösung des mehrschichtigen Aufbaus gemäß Figur 4 vom Hilfsträger.

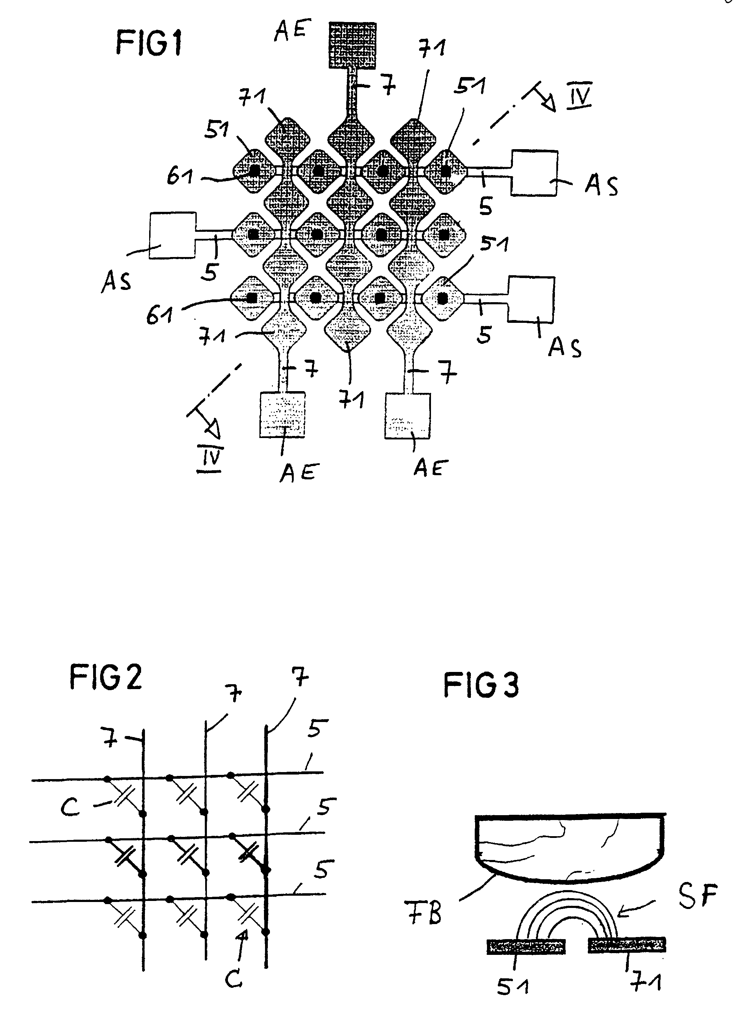

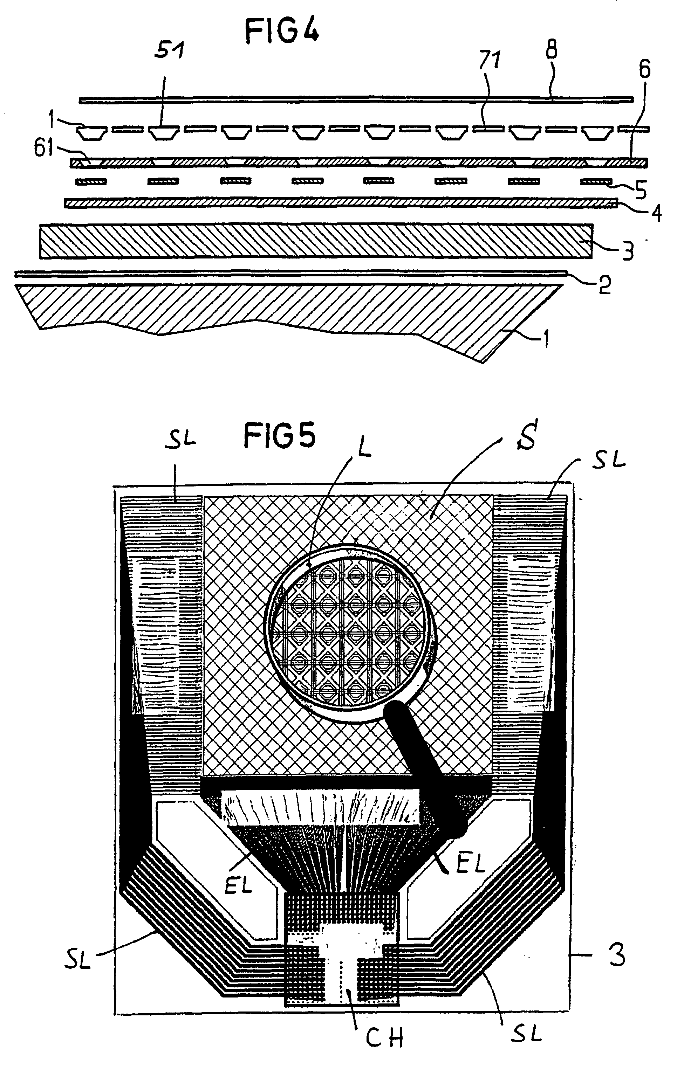

Figur 1 zeigt in stark vereinfachter schematischer Darstellung eine teilweise Draufsicht auf das Sensorfeld einer Sensoranordnung zur Erfassung von Fingerabdrücken, wobei der mehrschichtige Aufbau des Sensorfeldes dem in Figur 4 dargestellten Schnitt gemäß der Linie IV - IV zu entnehmen ist. Um eine bessere Übersicht zu ermöglichen, sind die einzelnen Schichten des mehrlagigen Aufbaus in Figur 4 in einem auseinandergezogenen Zustand dargestellt.

Bei der Herstellung des in den Figuren 1 und 4 dargestellten Sensorfeldes wird von einem starren Hilfsträger 1 aus Borosilicatglas ausgegangen. Um die Haftung des nachfolgenden Aufbaus auf dem Hilfsträger 1 mit Sicherheit zu gewährleisten, wird durch Sputtern eine Haftschicht 2 aus Titan aufgebracht. Auf diese Haftschicht 2 wird dann eine Basisschicht 3 aufgebracht. Im dargestellten Ausführungsbeispiel handelt es sich bei dieser Basisschicht 3 um eine Folie aus einem thermostabilen Polyimid, die eine Dicke von 50 µm aufweist und durch Laminieren aufgebracht wird. Anschließend wird die Basisschicht 3 durch das Aufschleudern eines Isolationsmaterials planarisiert, wobei dieser Vorgang in Figur 4 durch eine separat dargestellte Planarisierung 4 aufgezeigt ist.

Die nachfolgende Erzeugung metallischer Feinstrukturen in Form einer Schar von ersten Leiterbahnen 5 kann grundsätzlich in Subtraktivtechnik, Additivtechnik oder Semiadditivtechnik vorgenommen werden. Im geschilderten Ausführungsbeispiel werden die ersten Leiterbahnen 5 semiadditiv hergestellt. Auf die ganzflächig mit einer Schichtenfolge aus Titan und Paladium besputterte Planarisierung 4 wird dabei ein in der Zeichnung nicht dargestelltes Photoresist aufgebracht und so strukturiert, daß auf das frei entwickelte Leiterbahnbild z.B. galvanisch Gold oder galvanisch bzw. chemisch Kupfer abgeschieden werden kann. Nach dem Strippen des Photoresists werden dann die nicht den gewünschten ersten Leiterbahnen 5 entsprechenden Bereiche der Schichtenfolge aus Titan und Paladium durch selektives Ätzen bis zur Oberfläche der Planarisierung 4 abgetragen.

Auf die ersten Leiterbahnen 5 wird dann eine photostrukturierbare erste Isolationsschicht 6 aufgebracht, in welche durch Belichten und Entwickeln Löcher 61 eingebracht werden, die beispielsweise einen Durchmesser von 25 µm aufweisen. Bei der nachfolgenden Herstellung einer zweiten Lage metallischer Feinstrukturen in Form von ersten Elektroden 51, zweiten Leiterbahnen 7 und zweiten Elektroden 71 werden dann im Bereich der Löcher 61 Durchkontaktierungen erzeugt, welche die ersten Elektroden 51 mit zugeordneten darunterliegenden ersten Leiterbahnen 5 elektrisch leitend verbinden. Die vorstehend erwähnte zweite Lage metallischer Feinstrukturen wird im geschilderten Ausführungsbeispiel wieder semiadditiv hergestellt.

Aus der schematischen Darstellung gemäß Figur 1 ist ersichtlich, daß sich die Schar von ersten Leiterbahnen 5 und die Schar von zweiten Leiterbahnen 7 orthogonal kreuzen. Es ist außerdem ersichtlich, daß die zweiten Elektroden 71 durch flächige Verbreiterungen der zweiten Leiterbahnen 7 gebildet sind und daß die ersten Elektroden 51 und die zweiten Elektroden 71 eine Art Pixelfeld bilden, dessen Pixelraster im dargestellten Ausführungsbeispiel 70 µm beträgt. Die ersten Leiterbahnen 5 münden endseitig in Anschlüsse für Sendeleitungen AS, während die zweiten Leiterbahnen 7 endseitig in Anschlüsse für Empfangsleitungen AE münden. Über die Anschlüsse AS und AE wird das Sensorfeld dann mit einer Auswerteelektronik verbunden.

Aus Figur 4 ist noch ersichtlich, daß auf die zweite Lage metallischer Feinstrukturen schließlich eine zweite Isolationsschicht 8 aufgebracht wird, welche neben der elektrischen Isolierung der ersten und zweiten Elektroden 51 und 71 auch als Passivierungsschicht dient und beispielsweise aus BaTiO₃, Al₂O₃ oder SiO₃ besteht. Nach elektrischer und optischer Prüfung wird der aus mehreren zusammenhängenden Einzelanordnungen bestehende Mehrlagenaufbau beispielsweise mit einem Nd:YAG-Laser bis auf die Haftschicht 2 hinunter in einzelne Sensorfelder getrennt, die, wie bereits erwähnt wurde, eine Mindestgröße von ca. 13x13 mm aufweisen sollten. Nun erfolgt die Ablation des Schichtaufbaus vom Hilfsträger mit Hilfe eines Excimer-Lasers, der mit XeF (Wellenlänge 350 nm) betrieben wird.

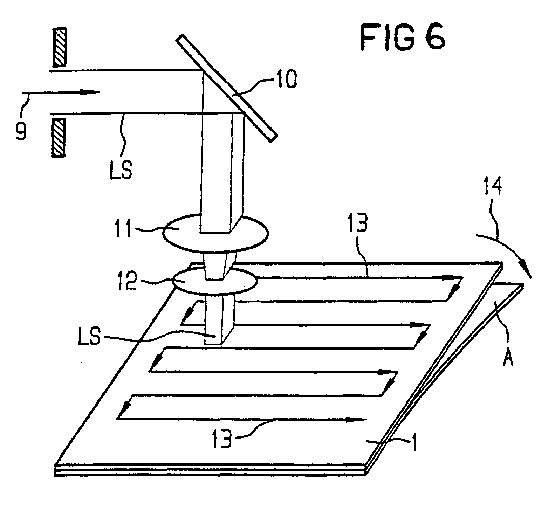

Die vorstehend erwähnte Laserablation wird mit Hilfe einer in Figur 6 schematisch dargestellten Anordnung vorgenommen. Die Laserstrahlung LS des Excimer-Lasers wird dabei in Richtung des Pfeiles 9 auf einen Umlenkspiegel 10 gerichtet und über telezentrische Abbildungslinsen 11 und 12 auf die Oberfläche des Hilfsträgers 1 gelenkt. Der Hilfsträger 1 und der aus den Schichten 3 bis 8 (vgl. Figur 4) bestehende Aufbau A sind auf einem in Figur 6 nicht dargestellten XY-Tisch angeordnet, der ein Scannen mit einer Relativbewegung zwischen der ein rechteckiges Strahlprofil aufweisenden Laserstrahlung LS und dem Hilfsträger 1 ermöglicht. Diese Scan-Bewegung ist in Figur 6 durch Pfeile 13 angedeutet.

Durch die Einwirkung der Laserstrahlung LS wird in einem kalten Vorgang die Haftwirkung zwischen der Haftschicht 2 und der Basisschicht 3 zumindest weitgehend aufgehoben, so daß der Aufbau A abgelöst werden kann, so wie es in Figur 6 durch den Pfeil 14 angedeutet ist. Ist die Basisschicht 3 mit Hilfe eines Klebers auf die Haftschicht 2 aufgebracht, so hebt die Laserstrahl LS in vergleichbarer Weise die Wirkung dieses Klebers auf.

Der Hilfsträger 1 mit der Haftschicht 2 (vgl. Figur 4) kann nach einer Reinigung wiederverwendet werden.

Figur 3 zeigt ein Ersatzschaltbild des in Figur 1 schematisch dargestellten Sensorfeldes. Zwischen den ersten Leiterbahnen 5 und den orthogonal kreuzenden zweiten Leiterbahnen 6 werden jeweils Kapazitäten C gebildet. Bei diesen Kapazitäten C handelt es sich um Streukapazitäten zwischen benachbarten ersten Elektroden 51 und zweiten Elektroden 71 (vgl. Figur 1). Im geschilderten Ausführungsbeispiel ist C < 10fF.

Bei dem geschilderten Sensorfeld, das auch als passives Sensor-Array bezeichnet werden könnte, dient nun das Streufeld zwischen benachbarten ersten Elektroden 51 und zweiten Elektroden 71 als Meßgröße bei der Erfassung von Fingerabdrücken.

Dieses auch als Fringing Field-Meßprinzip bezeichnete Prinzip ist aus Figur 3 ersichtlich. Hier ist das Streufeld zwischen einer ersten Elektrode 51 und einer benachbarten zweiten Elektrode 71 mit SF bezeichnet. Die darüber erkennbare Fingerbeere FB einer zu identifizierenden Person verändert nun das Streufeld SF in Abhängigkeit von dem jeweiligen Muster der Hautlinien.

Figur 5 zeigt eine Draufsicht auf einen fertigen Fingerprint-Sensor, bei welchem das Sensorfeld mit S bezeichnet ist. Im Bereich einer Lupe L ist zu erkennen, daß die Struktur des Sensorfeldes F der Struktur des in Figur 1 schematisch dargestellten Sensorfeldes entspricht. Auf der Basisschicht 3 führen die beiden Seiten des Sensorfeldes S Sendeleitungen SL zu einem unterhalb des Sensorfeldes S angeordneten Chip CH. Bei diesem Chip CH handelt es sich um die Auswerteelektronik des Fingerprint-Sensors. Vom unteren Rand des Sensorfeldes S ausgehend führen Empfangsleitungen EL zum Chip CH.

Über die Sendeleitungen SL werden beispielsweise Rechteckimpulse den ersten Elektroden 51 (vgl. Figur 1) des passiven Sensorfeldes S zugeführt, während die Empfangsleitungen EL die durch die Fingerbeere FB verursachte Änderung des Streufeldes SF zwischen ersten und zweiten Elektroden 51 und 71 (vgl. Figur 3) erfassen und dadurch dem Chip CH eine Identifizierung der entsprechenden Person ermöglichen.

Bei dem in Figur 5 dargestellten Fingerprint-Sensor entfallen die in Figur 1 dargestellten Anschlüsse AS und AE. Die Sendeleitungen SL sind als Weiterführungen der ersten Leiterbahnen 5 auf der Basisschicht 3 ausgebildet. In entsprechender Weise sind die Empfangsleitungen EL als Weiterführungen der zweiten Leiterbahnen 7 auf der ersten Isolationsschicht 6 ausgebildet.

## Patentansprüche

1. Sensorfeld für einen kapazitiv messenden Fingerprint-Sensor, bei welchem die durch aufliegende Finger-Hautrillen verursachte Änderung der Streukapazität zweier benachbarter Elektroden gemessen wird, mit
- einei Basisschicht (3) aus einem elektrisch isolierenden Material;
- mehreren auf der Basisschicht (3) angeordneten ersten Leiterbahnen (5);
- einer auf die Basisschicht (3) und die ersten Leiterbahnen (5) aufgebrachten ersten Isolationsschicht (6) aus einem elektrisch isolierenden Material;
- mehreren auf der ersten Isolationsschicht (6) angeordneten ersten Elektroden (51), die über Durchkontaktierungen mit zugeordneten darunterliegenden ersten Leiterbahnen (5) elektrisch leitend verbunden sind;
- mehreren auf der ersten Isolationsschicht (6) angeordneten und in der projizierenden Draufsicht die ersten Leiterbahnen (5) kreuzenden zweiten Leiterbahnen (7);
- mehreren auf der ersten Isolationsschicht (6) angeordneten zweiten Elektroden (71), die mit zugeordneten zweiten Leiterbahnen (7) elektrisch leitend verbunden sind; und mit
- einer auf die erste Isolationsschicht (6), die ersten Elektroden (51), die zweiten Leiterbahnen (7) und die zweiten Elektroden (71) aufgebrachten zweiten Isolationsschicht (8), sodass ein direkter elektrischer Kontakt der ersten Elektroden und Leiterbahnen mit den zweiten Elektroden und Leiterbahnen verhindert wird.

2. Sensorfeld nach Anspruch 1, **dadurch gekennzeichnet, daß** die Basisschicht (3) aus einem organischen Material besteht.

3. Sensorfeld nach Anspruch 1 oder 2, **dadurch gekennzeichnet, daß** die Basisschicht (3) aus einem flexiblen organischen Material besteht.

4. Sensorfeld nach Anspruch 3, **gekennzeichnet durch** eine Basisschicht (3) in Form einer Folie.

5. Sensorfeld nach Anspruch 4, **gekennzeichnet durch** eine Folie aus einem thermostabilen Polyimid.

6. Sensorfeld nach Anspruch 4 oder 5, **gekennzeichnet durch** eine auf die Basisschicht (3) aufgebrachte Planarisierung (4) aus einem elektrisch isolierenden Material.

7. Sensorfeld nach einem der vorhergehenden Ansprüche, **dadurch gekennzeichnet, daß** in die erste Isolationsschicht (6) Löcher (61) eingebracht sind, die zur Bildung der Durchkontaktierungen zwischen den ersten Leiterbahnen (5) und den zugeordneten ersten Elektroden (51) metallisiert sind.

8. Sensorfeld nach einem der vorhergehenden Ansprüche, **dadurch gekennzeichnet, daß** die ersten Leiterbahnen (5) und die zweiten Leiterbahnen (7) sich orthogonal kreuzen.

9. Sensorfeld nach einem der vorhergehenden Ansprüche, **dadurch gekennzeichnet, daß** die zweiten Elektroden (71) durch flächige Verbreiterungen der zweiten Leiterbahnen (7) gebildet sind.

10. Verfahren zur Herstellung eines Sensorfeldes für einen kapazitiv messenden Fingerprint-Sensor bei welchem die durch aufliegende Finger-Hautrillen verursachte Änderung der Streukapazität zweier benachbarter Elektroden gemessen wird, mit folgenden Schritten:
- Aufbringen einer dünnen Basisschicht (3) aus einem flexiblen organischen Material auf einem starren Hilfsträger (1);
- Erzeugung von mehreren auf der Basisschicht (3) angeordneten ersten Leiterbahnen (5);
- Aufbringen einer ersten Isolationsschicht (6) auf die Basisschicht (3) und die ersten Leiterbahnen (5);
- Einbringen von Löchern (61) in die Isolationsschicht (6);
- Bildung von mehreren ersten Elektroden (51), von mehreren in der projizierenden Draufsicht die ersten Leiterbahnen (5) kreuzenden zweiten Leiterbahnen (7) und von mehreren zweiten Elektroden (71) auf der ersten Isolationsschicht (6), wobei die ersten Elektroden (51) über eine Metallisierung der Löcher (61) in der Isolationsschicht (6) mit zugeordneten darunterliegenden ersten Leiterbahnen (5) elektrisch leitend verbunden werden und wobei die zweiten Elektroden (71) mit zugeordneten zweiten Leiterbahnen (7) elektrisch leitend verbunden werden;
- Aufbringen einer zweiten Isolationsschicht (8) auf die erste Isolationsschicht (6), die ersten Elektroden (51), die zweiten Leiterbahnen (7) und die zweiten Elektroden (71), sodass ein direkter elektrischer Kontakt der ersten Elektroden und Leiterbahnen mit den zweiten Elektroden und Leiterbahnen verhindert wird,
- Ablösung der Basisschicht (3) vom Hilfsträger durch Einwirkung von Laserstrahlung (LS), die durch den Hilfsträger (1) hindurch auf die Basisschicht (3) gerichtet wird, wobei der Hilfsträger (1) aus einem für die zur Ablösung der Basisschicht (3) verwendete Laserstrahlung (LS) zumindest weitgehend durchlässigen Material besteht.

11. Verfahren nach Anspruch 10, **dadurch gekennzeichnet, daß** ein Hilfsträger (1) aus Quarzglas verwendet wird und daß für die Ablösung der Basisschicht (3) ein Excimerlaser mit einer Wellenlänge der Laserstrahlung (LS) von 248 nm verwendet wird.

12. Verfahren nach Anspruch 10, **dadurch gekennzeichnet, daß** ein Hilfsträger (1) aus Borosilicatglas verwendet wird und daß für die Ablösung der Basisschicht (3) ein Excimerlaser mit einer Wellenlänge der Laserstrahlung (LS) von 350 nm verwendet wird.

13. Verfahren nach einem der Ansprüche 10 bis 12, **dadurch gekennzeichnet, daß** vor dem Aufbringen der Basisschicht (3) eine Haftschicht (2) auf den Hilfsträger (1) aufgebracht wird.

14. Verfahren nach Anspruch 13, **dadurch gekennzeichnet, daß** eine Haftschicht (2) aus Titan auf den Hilfsträger (1) aufgebracht wird.

15. Verfahren nach Anspruch 13 oder 14, **dadurch gekennzeichnet, daß** die Haftschicht (2) durch Sputtern auf den Hilfsträger (1) aufgebracht wird.

16. Verfahren nach einem der Ansprüche 10 bis 15, **dadurch gekennzeichnet, daß** die Basisschicht (3) in Form einer Folie aufgebracht wird.

## Claims

1. Sensor array for a capacitively measuring fingerprint sensor, in which the change in the stray capacitance between two adjacent electrodes as a result of the grooves in the finger skin which are in contact is measured, having
- a base layer (3) made of an electrically insulating material;
- a plurality of first conductor tracks (5) arranged on the base layer (3);
- a first insulation layer (6), made of an electrically insulating material, applied to the base layer (3) and the first conductor tracks (5)
- a plurality of first electrodes (51) which are arranged on the first insulation layer (6) and are electrically conductively connected via plated-through holes to associated first conductor tracks (5) situated underneath;
- a plurality of second conductor tracks (7) which are arranged on the first insulation layer (6) and cross the first conductor tracks (5) in the projecting plan view;
- a plurality of second electrodes (71) which are arranged on the first insulation layer (6) and are electrically conductively connected to associated second conductor tracks (7); and having
- a second insulation layer (8) applied to the first insulation layer (6), the first electrodes (51), the second conductor tracks (7) and the second electrodes (71), so that direct electrical contact between the first electrodes and conductor tracks and the second electrodes and conductor tracks is prevented.

2. Sensor array according to Claim 1, **characterized in that** the base layer (3) is made of an organic material.

3. Sensor array according to Claim 1 or 2, **characterized in that** the base layer (3) is made of a flexible organic material.

4. Sensor array according to Claim 3, **characterized by** a base layer (3) in the form of a film.

5. Sensor array according to Claim 4, **characterized by** a film made of a thermostable polyimide.

6. Sensor array according to Claim 4 or 5, **characterized by** a planar layer (4), made of an electrically insulating material, which is applied to the base layer (3).

7. Sensor array according to one of the preceding claims, **characterized in that** the first insulation layer (6) has holes (61) made in it which are metallized in order to form the plated-through holes between the first conductor tracks (5) and the associated first electrodes (51).

8. Sensor array according to one of the preceding claims, **characterized in that** the first conductor tracks (5) and the second conductor tracks (7) cross one another orthogonally.

9. Sensor array according to one of the preceding claims, **characterized in that** the second electrodes (71) are formed by planar widened portions of the second conductor tracks (7).

10. Method for producing a sensor array for a capacitively measuring fingerprint sensor, in which the change in the stray capacitance between two adjacent electrodes as a result of the grooves in the finger skin which are in contact is measured, having the following steps:
- a thin base layer (3) made of a flexible organic material is applied on a rigid auxiliary support (1);
- a plurality of first conductor tracks (5) arranged on the base layer (3) are produced;
- a first insulation layer (6) is applied to the base layer (3) and the first conductor tracks (5);
- holes (61) are made in the insulation layer (6);
- a plurality of first electrodes (51), a plurality of second conductor tracks (7) crossing the first conductor tracks (5) in the projecting plan view, and a plurality of second electrodes (71) are formed on the first insulation layer (6), the first electrodes (51) being electrically conductively connected via a metal coating in the holes (61) in the insulation layer (6) to associated first conductor tracks (5) situated underneath, and the second electrodes (71) being electrically conductively connected to associated second conductor tracks (7);
- a second insulation layer (8) is applied to the first insulation layer (6), the first electrodes (51), the second conductor tracks (7) and the second electrodes (71), so that direct electrical contact between the first electrodes and conductor tracks and the second electrodes and conductor tracks is prevented,
- the base layer (3) is removed from the auxiliary support by the action of laser radiation (LS) which is directed through the auxiliary support (1) onto the base layer (3), the auxiliary support (1) being made of a material which is at least extensively permeable to the laser radiation (LS) used for removing the base layer (3).

11. Method according to Claim 10, **characterized in that** an auxiliary support (1) made of quartz glass is used, and **in that** an excimer laser having a laser radiation (LS) wavelength of 248 nm is used for removing the base layer (3).

12. Method according to Claim 10, **characterized in that** an auxiliary support (1) made of borosilicate glass is used, and **in that** an excimer laser having a laser radiation (LS) wavelength of 350 nm is used for removing the base layer (3).

13. Method according to one of Claims 10 to 12, **characterized in that** an adhesive layer (2) is applied to the auxiliary support (1) before the base layer (3) is applied.

14. Method according to Claim 13, **characterized in that** an adhesive layer (2) made of titanium is applied to the auxiliary support (1).

15. Method according to Claim 13 or 14, **characterized in that** the adhesive layer (2) is applied to the auxiliary support (1) by sputtering.

16. Method according to one of Claims 10 to 15, **characterized in that** the base layer (3) is applied in the form of a film.

## Revendications

1. Champ capteur pour un capteur d'empreintes digitales à mesure capacitive, dans lequel la variation, due à des crêtes dermo-épidermiques posées dessus, de la capacité de fuite de deux électrodes voisines est mesurée, comportant
- une couche de base (3) en un matériau électriquement isolant ;
- plusieurs premières pistes conductrices (5) placées sur la couche de base (3) ;
- une première couche isolante (6), en un matériau électriquement isolant, appliquée sur la couche de base (3) et sur les premières pistes conductrices (5) ;
- plusieurs premières électrodes (51) qui sont placées sur la première couche isolante (6) et qui sont reliées de manière à conduire l'électricité par l'intermédiaire de contacts traversants à des premières pistes conductrices (5) associées se trouvant en dessous ;
- plusieurs deuxièmes pistes conductrices (7) placées sur la première couche isolante (6) et croisant les premières pistes conductrices (5) dans la vue de dessus en projection ;
- plusieurs deuxièmes électrodes (71) qui sont placées sur la première couche isolante (6) et qui sont reliées de manière à conduire l'électricité à des deuxièmes pistes conductrices (7) associées ; et
- une deuxième couche isolante (8) qui est appliquée sur la première couche isolante (6), sur les premières électrodes (51), sur les deuxièmes pistes conductrices (7) et sur les deuxièmes électrodes (71) de manière à empêcher un contact électrique direct des premières électrodes et pistes conductrices avec les deuxièmes électrodes et pistes conductrices.

2. Champ capteur selon la revendication 1, **caractérisé par le fait que** la couche de base (3) est en un matériau organique.

3. Champ capteur selon la revendication 1 ou 2, **caractérisé par le fait que** la couche de base (3) est en un matériau organique flexible.

4. Champ capteur selon la revendication 3, **caractérisé par** une couche de base (3) sous forme de feuille.

5. Champ capteur selon la revendication 4, **caractérisé par** une feuille en un polyimide thermostable.

6. Champ capteur selon la revendication 4 ou 5, **caractérisé par** une surface planaire (4) en un matériau électriquement isolant et appliquée sur la couche de base (3).

7. Champ capteur selon l'une des revendications précédentes, **caractérisé par le fait qu'**il est ménagé dans la première couche isolante (6) des trous (61) qui sont métallisés pour former des contacts traversants entre les premières pistes conductrices (5) et les premières électrodes (51) associées.

8. Champ capteur selon l'une des revendications précédentes, **caractérisé par le fait que** les premières pistes conductrices (5) et les deuxièmes pistes conductrices (7) se croisent en angle droit.

9. Champ capteur selon l'une des revendications précédentes, **caractérisé par le fait que** les deuxièmes électrodes (71) sont formées par des élargissements surfaciques des deuxièmes pistes conductrices (7).

10. Procédé pour la fabrication d'un champ capteur pour un capteur d'empreintes digitales à mesure capacitive, dans lequel la variation, due à des crêtes dermo-épidermiques posées dessus, de la capacité de fuite de deux électrodes voisines est mesurée, comportant les étapes suivantes :
- application d'une mince couche de base (3) en un matériau organique flexible sur un support auxiliaire (1) rigide ;
- production de plusieurs premières pistes conductrices (5) placées sur la couche de base (3) ;
- application d'une première couche isolante (6) sur la couche de base (3) et sur les premières pistes conductrices (5) ;
- fabrication de trous (61) dans la couche isolante (6) ;
- formation de plusieurs premières électrodes (51), de plusieurs deuxièmes pistes conductrices (7) croisant les premières pistes conductrices (5) dans la vue de dessus en projection et de plusieurs deuxièmes électrodes (71) sur la première couche isolante (6), les premières électrodes (51) étant reliées de façon à conduire l'électricité par l'intermédiaire d'une métallisation des trous (61) dans la couche isolante (6) à des premières pistes conductrices (5) associées se trouvant en dessous et les deuxièmes électrodes (71) étant reliées de façon à conduire l'électricité à des deuxièmes pistes conductrices (7) associées ;
- application d'une deuxième couche isolante (8) sur la première couche isolante (6), sur les premières électrodes (51), sur les deuxièmes pistes conductrices (7) et sur les deuxièmes électrodes (71) de manière à empêcher un contact électrique direct des premières électrodes et pistes conductrices avec les deuxièmes électrodes et pistes conductrices ;
- détachement de la couche de base (3) du support auxiliaire par l'action d'un rayon laser (LS) qui est dirigé à travers le support auxiliaire (1) sur la couche de base (3), le support auxiliaire (1) étant en un matériau au moins largement transparent au rayon laser (LS) utilisé pour le détachement de la couche de base (3).

11. Procédé selon la revendication 10, **caractérisé par le fait qu'**on utilise un support auxiliaire (1) en verre quartzeux et que, pour détacher la couche de base (3), on utilise un laser excimer ayant une longueur d'onde du rayon laser (LS) de 248 nm.

12. Procédé selon la revendication 10, **caractérisé par le fait qu'**on utilise un support auxiliaire (1) en verre de borosilicate et que, pour détacher la couche de base (3), on utilise un laser excimer ayant une longueur d'onde du rayon laser (LS) de 350 nm.

13. Procédé selon l'une des revendications 10 à 12, **caractérisé par le fait que**, avant d'appliquer la couche de base (3), on applique une couche adhésive (2) sur le support auxiliaire (1).

14. Procédé selon la revendication 13, **caractérisé par le fait qu'**on applique une couche adhésive (2) en titane sur le support auxiliaire (1).

15. Procédé selon la revendication 13 ou 14, **caractérisé par le fait qu'**on applique la couche adhésive (2) par pulvérisation sur le support auxiliaire (1).

16. Procédé selon l'une des revendications 10 à 15, **caractérisé par le fait qu'**on applique la couche de base (3) sous la forme d'une feuille.
